# EUROPEAN PATENT APPLICATION

(11) **EP 0 822 380 A2**
(43) Date of publication of application: **04.02.1998**
(21) Application number: 97830322.0
(22) Date of filing: 27.06.1997
(51) Int. Cl.: F26B 13/00, F26B 21/00

(54) **Drying apparatus for continuous-flow semifinished products**

(30) Priority: 30.07.1996 IT MI961624
(71) Applicant: Chiesa, Carlo, 21040 Vedano Olona (Varese) (IT)
(72) Inventor: Chiesa, Carlo, 21040 Vedano Olona, (Varese) (IT); Chiesa, Roberto, 21040 Vedano Olona, (Varese) (IT)
(74) Representative: Sutto, Luca

(57) **Abstract**

A drying apparatus for continuous-flow semifinished products is disclosed in which a drying duct (6) is defined, as well as ventilating means comprising a first and a second supply channels (12, 13) defining respective air flows of substantially planar conformation disposed transversely to the movement direction of the continuous semifinished product (7).

## Description

The present invention relates to a drying apparatus for continuous-flow semifinished products. In particular, the device in reference may be employed for drying semifinished products of various structures, such as thread-like elements, sheet elements or elements of still different conformations.

It is known that when continuous drying of semifinished products coming from previous water-cooling or washing operations is to be carried out, air drying apparatuses are employed that have differentiated structures and operating capacities depending on requirements.

In particular, with reference by way of non-limiting example, to a continuous production by extrusion of elongated elements of plastic material currently known as "strands", these elongated elements coming out of an extruder need to be cooled for being then submitted to subsequent workings such as cutting or reduction to chips for making granulated materials adapted to a variety of uses in a great number of industrial fields.

For the purpose of carrying out cooling of the elongated elements from the extruder, water tanks are conventionally employed into which the elongated elements are dipped as they come out of the extruder. Subsequently, before carrying out cutting of the elongated elements, accomplishment of an efficient drying operation is required in order to prevent water particles from reaching the cutting station and consequently be present in the granulated material produced by said station.

Presently, in order to carry out drying of the above mentioned extruded elongated elements, air devices are currently employed that comprise a drying duct such arranged as to be passed through by the semifinished products to be dried and provided with a ventilating system adapted to send an air flow to the inside of the drying duct itself to carry out surface dehydration of the continuous-flow semifinished product.

Usually, the ventilating system used comprises at least one ventilating member and a delivery channel opening into a predetermined section of the drying duct.

As an alternative solution to the above, and in accordance with more recent solutions, multi-nozzle delivery systems have been also used in which said nozzles are disposed parallelly in side by side relationship and are optionally active on both sides of the semifinished product, at one and the same transverse section of the drying duct.

Although they have been widely employed, the above described embodiments have however shown many drawbacks and operating limits.

Firstly, it is to point out that the above described apparatuses of known type are not always capable of ensuring an overall drying of the processed semifinished products, in that the intervention area of the air flow is very reduced.

In addition, it is also to point out that apparatuses of known type are unable to ensure a sufficient air velocity as compared with that of the semifinished product and therefore optimal drying capabilities cannot be reached.

A further drawback of traditional apparatuses is also represented by the fact that the latter are generally very noisy due both to a weak soundproofing feature of the whole ventilating system and to the air streams generated at the exit of the inlet and outlet openings of the drying duct, which clearly brings about transportation of sound waves externally of the whole device.

In particular, air coming out of the inlet opening of the drying duct represents a very dangerous inconvenience also because this air is sent to the extruder head disposed upstream of the drying apparatus giving rise, as a result, to a thermal cooling effect. For the above reason, when traditional drying devices are used the extruder head must be conveniently protected or suitably spaced apart from the drying apparatus.

Finally, apparatuses of known type are generally of little reliability from an operating point of view in the case in which there are important size discontinuities in the continuous semifinished product to be dried, which is likely to bring about jamming in the line and, as a result, interruption of the drying cycle. Under this situation, it is an object of the present invention to substantially overcome all the above mentioned drawbacks.

In particular, it is a fundamental object of the invention to provide a very efficient and reliable drying apparatus in which noise generated by the apparatus itself is substantially reduced to the most and in which all drawbacks typical of traditional apparatuses are substantially avoided.

The foregoing and further objects that will become more apparent in the progress of the present description are substantially achieved by a drying apparatus as described in the appended claims.

Further features and advantages will be best understood from the detailed description of a preferred but non-exclusive embodiment of a drying apparatus for continuous-flow semifinished products in accordance with the present invention. This description will be taken hereinafter with reference to the accompanying drawings, in which:
- Fig. 1 is a diagrammatic side view, partly in section, of a drying apparatus in accordance with the present invention;
- Fig. 1a is an enlarged section of a detail of Fig. 1 relating to sound-absorbent or acoustic insulation means;
- Fig. 2 is a front view of the apparatus in Fig. 1, and
- Fig. 3 diagrammatically shows a production line of granulated material in which the drying apparatus can be incorporated.

With reference to the accompanying drawings, a drying apparatus for continuous-flow semifinished products in accordance with the present invention has been generally identified by reference numeral 1.

The drying apparatus 1 comprises a main body 2 having a base portion or base 3 arranged to be fixed to the ground by means of an adjustable-in-height support system 4, for example. Engaged on top of the base portion is a shaped movable portion 5 associated with the base portion 3 in such a manner that the main body 2 defines at least one drying duct 6 provided with at least one inlet opening 6a and at least one outlet opening 6b.

The drying duct 6, under operating conditions, is passed through by at least one corresponding continuous-flow semifinished product 7 to be dried, which is movable from said inlet opening 6a to said outlet opening 6b.

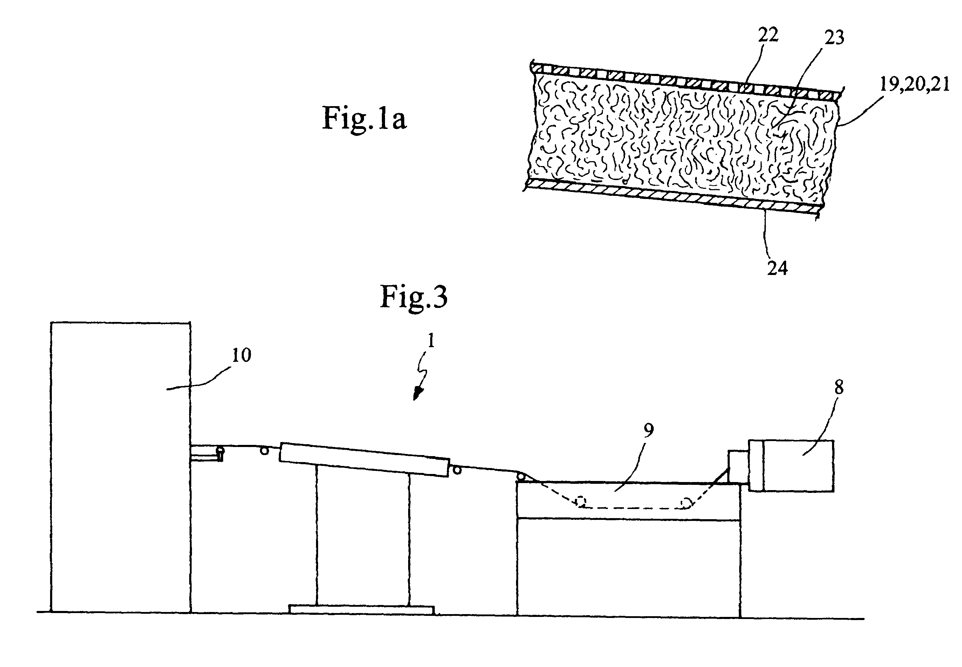

In the embodiment shown, the continuous semifinished product 7 is formed of one or more elongated elements currently referred to as "strands", which (see Fig. 3) are produced by extrusion from an extruder device 8, cooled in a water tank 9, sent to the drying apparatus 1 and then addressed to a shearing machine 10 carrying out transformation of the semifinished products into chips or pellets (granulated material) of predetermined sizes.

Turning back to the detailed description of the drying apparatus 1 in question, it is to point out that duct 6 is preferably inclined at a predetermined acute angle relative to the horizontal so as to define movement of the continuous-flow semifinished product from bottom to top.

For the purpose of carrying out drying of the semifinished processed product, ventilating means generally denoted by 11 is provided, which means is operatively associated with a drying duct 6 to send air onto the continuous semifinished product 7.

Advantageously and in an original manner, the ventilating means 11 comprises at least one first and one second supply channels 12 and 13 defining a first and a second air flow respectively, of a substantially planar conformation.

It is to note that depending on the material forming the semifinished products to be dried, three or more supply channels disposed mutually in side by side relation may be provided.

Turning back to the example herein shown, the first and second flows coming out of the supply channels 12 and 13 substantially consist of light streams of air disposed transversely to the movement direction of the continuous semifinished product 7 and directed to the latter.

It is to note that preferably the second supply channel 13 is disposed side by side with, and close to the first supply channel 12, downstream of said channel 12 relative to a movement direction of the continuous semifinished product 7. In this way, the light streams of air emerging from the supply channels 12 and 13 come to one and the same section of the continuous semifinished product at successive times, thereby producing an almost perfect drying of the semifinished product surface.

From a structural point of view, the supply channels 12 and 13 are defined by walls converging on the side of the continuous semifinished product 7 so as to cause a predetermined velocity increase of the air flow passing through the channels relative to the flow velocity upstream of channels 12 and 13.

More particularly, these supply channels are made at an end portion 14 of an air delivery channel 15 which is also defined by walls converging on the side of the continuous semifinished product 7.

Preferably the first and second supply channels 12 and 13 are disposed symmetrically to a symmetry plane of the end portion 14 of the delivery channel 15 and have the same geometric conformation so as to substantially break the air flow from the delivery channel into two identical halves, thereby ensuring the maximum operating efficiency during the drying step.

It is further to note that the first and second supply channels 12 and 13 are disposed on the same side relative to the continuous semifinished product. In this way, the air flows emerging from said supply channels impinge on the surface of the continuous semifinished product without any mutual interference and consequently without generating too many swirling phenomena that, in addition to giving rise to some noise, could cause dangerous air gusts to the outside through the inlet and outlet openings 6a and 6b of the drying duct 6.

Advantageously, it is also to point out that the apparatus in question comprises an auxiliary channel 16 opposite to the supply channels 12 and 13 and also brought into fluid communication with the drying duct 6. Practically, the auxiliary channel is capable of receiving the air sent from the supply channels after said air has taken up the water particles present on the continuous semifinished product, then carrying out discharge of the air-water mixture to the surrounding atmosphere.

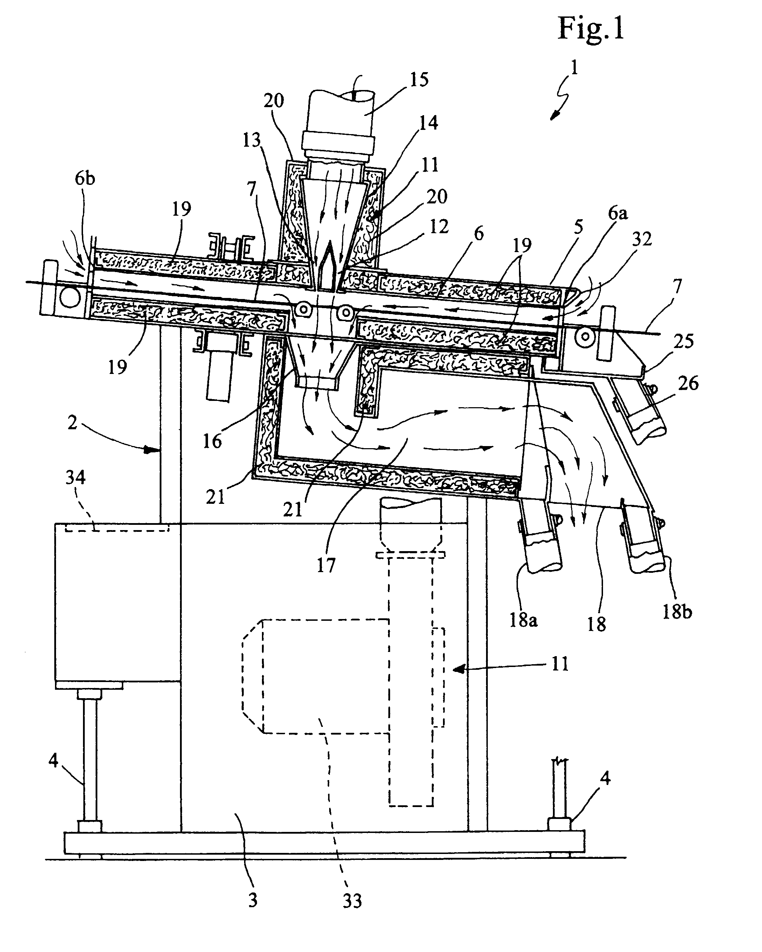

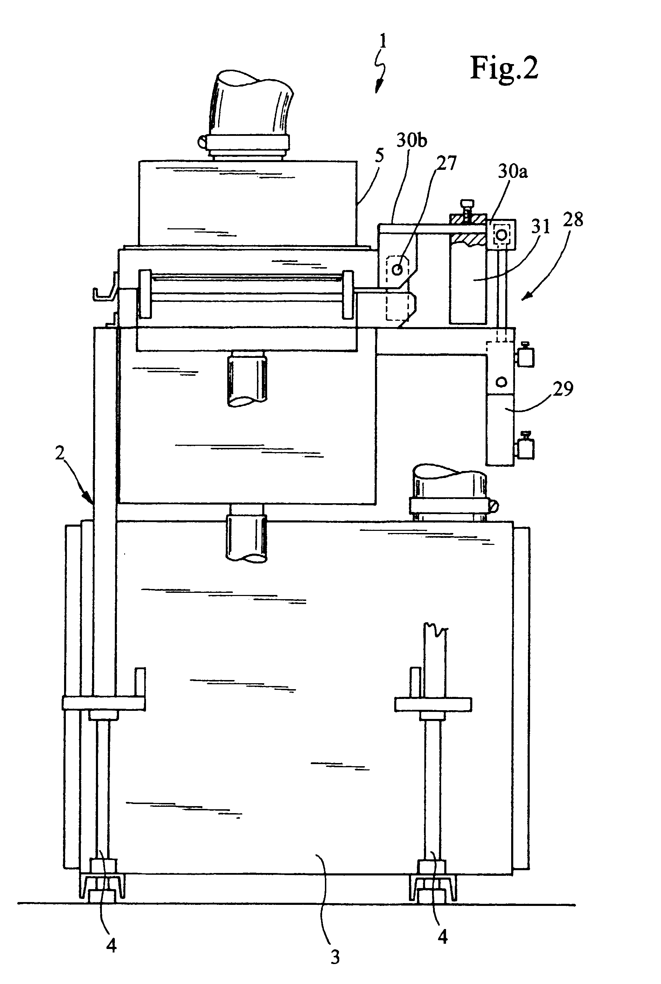

Preferably the auxiliary channel 16 has walls of a form converging away from the continuous semifinished product in order to produce a further acceleration in the fluid passing through the auxiliary channel. This advantageously causes a vacuum condition within the whole drying channel 6 by a Venturi effect and, as a result, gives rise to an air stream directed both from the outlet opening 6a and from the inlet opening 6b towards the auxiliary channel 16 (see arrows in Fig. 1 indicating the air streams).

By virtue of this construction and operating feature, air flows are substantially generated from the inlet and outlet opening towards the auxiliary channel. These air flows help in greatly increasing the drying capability of the apparatus in reference.

It is also to point out that placed downstream of the auxiliary channel 16 is a diffusion chamber 17 capable of causing a sufficient slowing down of the air from the supply channels 12 and 13 sending this reduced-velocity air to an evacuation opening 18 disposed downstream of the diffusion chamber itself. In this manner, air evacuated to the surrounding atmosphere is at a very reduced velocity, of a pressure substantially corresponding to ambient pressure, and therefore does not give rise to undesired noise phenomena. A second and a third water-exhaust lines 18a, 18b may be associated with the diffusion chamber, at the evacuation opening 18 for example.

Still for the purpose of minimizing noise produced by the apparatus, provision is also made for first, second and third acoustic insulation means 19, 20 and 21 associated with the drying duct 6, the end portion 14 of the delivery channel 15 and the diffusion chamber 17 respectively, so that substantially the whole apparatus 1 is conveniently insulated. It is to note that preferably this acoustic insulation means comprises a sandwich structure (see Fig. 1a) which is formed of a grid element or grating 22 facing the inside of the device and with which a layer of deadening noise-dissipating material 23 is associated (mineral wool or others for example) that, in turn, is coated with a laminate covering structure 24 which substantially defines the outer casing of the apparatus.

Advantageously, apparatus 1 further comprises a water collecting element 25 joined to the main body upstream of the inlet opening 6a as well as a corresponding first water exhaust line 26 acting on a bottom wall of the collecting element 25. Also provided is a second and a third water exhaust lines 18a, 18b associated with the diffusion chamber substantially close to said air-evacuation opening.

Preferably, in order to ensure an efficient operating reliability of the apparatus, the movable portion 5 of the main body 2 is in engagement with the base portion in a movable manner so as to be shiftable from a closed condition (Fig. 1), in which it defines the drying channel 6 in cooperation with the same base portion, to an opening position (not shown) in which the movable portion 5 is moved away from the base portion 3 to enable access to the inside of the drying channel, should inspections, servicing and cleaning operations or still other operations be for example required.

More particularly, the movable portion 5 of the main body 2 is hinged on the base portion at a hinging axis 27 (see Fig. 2) substantially parallel to the advance direction of the continuous semifinished product 7, so as to enable a displacement of the movable portion from its closed condition to its open condition, by carrying out an oscillatory motion.

Movement of the movable portion may be carried out both manually and, as shown in the accompanying drawings, by actuating means 28 operatively interposed between the base portion 3 and movable portion 5. In the case herein examined, the actuating means 28 preferably comprises, although it is not limited to, an air actuator 29 which is engaged to one end 30a of a connecting lever 30 rigidly fastened, at the other end 30b thereof, to said movable portion 5.

In the case of both manual operation and air operation, counter-weights 31 are operatively associated with the movable portion 5 and in particular said connecting lever 30, which counter-weights are disposed on the opposite side from the drying channel relative to said hinging axis 27 in order to ensure a predetermined lightening during the movement step of the movable portion 5 from said closed position to said open position.

It is also to note that, for the purpose of facilitating insertion of the continuous semifinished product 7 even when it has undesired swellings at its transverse section or when malfunctions occur, the drying channel 6 at its inlet opening 6a has an entry flaring of predetermined inclination.

It should be finally pointed out that the ventilating means 11, in addition to the above described pieces, further comprises at least one centrifugal fan 33 or similar air propulsion system, arranged to send a given air flow to the first and second supply channels 12 and 13.

Preferably, filtering means 34 is operatively associated with the fan in order to clean the air from particles or other material that in the long run could alter the aerodynamic properties of the ducts.

Operation of the drying apparatus in accordance with the invention described above mainly as regards structure is as follows.

As shown in Fig. 3, the continuous semifinished products 7 from the water tank 9 are sent to apparatus 1 and pass through the drying duct 6 from the inlet opening 6a to the outlet opening 6b. These semifinished products undergo a first drying step due to the air flow moving from the inlet opening 6a to the auxiliary duct 16 generated, as above described, by a Venturi effect by said auxiliary duct. Subsequently, the semifinished products 7 reach the area of the supply channels 12 and 13 where they encounter the first and second air flows of planar configuration, thereby undergoing strong drying steps that practically dry the semifinished product surface in almost a complete manner. Then, in the drying duct 6 portion between the auxiliary duct 16 and outlet opening 6b the semifinished products 7 encounter a second air flow directed from the outlet opening to the centre area of the drying duct so that an optimum drying of the semifinished products is achieved.

During the above described steps, it is to note that the possible humidity present in the air inside the apparatus 1 is evacuated through the water-exhaust lines 18a, 18b and 26. It is also to note that the air flow sent to the delivery duct 15 from fan 33 undergoes a strong acceleration only at the end portion of the supply channels and the auxiliary channel, being then suddenly slowed down at the diffusion chamber. This enables head losses to be reduced at most and low noise values to be achieved.

In addition, due to the great velocity at which the air flows impinge on the continuous semifinished products, a vacuum effect is obtained under said semifinished products, in particular when the latter are of thread-like conformation, thereby giving rise to a sudden and efficient water evaporation.

Actually, the first light stream of air sucks most of the water present on the semifinished product (in the order of 95%), whereas the second light stream of air only sucks a residual amount of said water (in the order of 5%).

The invention achieves important advantages.

Unquestionably, the operating efficiency of apparatus 1 in terms of drying capability achieves levels never reached up to now. In addition, while apparatus 1 has a great operating efficiency, it does not require propulsion systems (fans) of higher power than those currently in use and therefore does not increase either the apparatus power consumption or the noise of said apparatus.

In particular, with reference to the last-mentioned aspect it is to note that the invention is very efficient in reducing the noise of the drying operation to the most by providing, as already said, an efficient soundproofing system at the areas of relatively high flow rate, so that undesired air escapes from the inlet and outlet openings are avoided and the assurance exists that all air discharged to the outside has such a reduced velocity that no problems in terms of gusts, vibrations or other phenomena that are likely to directly or indirectly increase the apparatus noise, are caused.

In addition, due to the possibility offered by the apparatus of having a movable part capable of opening book-like, the apparatus is adapted to operate even in the case in which important swellings in the semifinished product occur, which swellings in traditional apparatuses often give rise to jammings at the drying duct and, as a result, to stoppage of the whole line.

A further positive aspect results from the fact that the water carried by the processed semifinished products is completely recovered and is not dangerously spread in an atomized form in the surrounding atmosphere, which happens in most traditional drying apparatuses.

Obviously, many modifications and variations may be made to the present invention, all of them falling within the scope of the inventive idea characterizing it.

## Claims

1. A drying apparatus for continuous-flow semifinished products comprising:
- a main body (2) defining at least one drying duct (6) passed through by at least one corresponding continuous-flow semifinished product (7) to be dried, the latter being movable from an inlet opening (6a) to an outlet opening (6b) of the drying duct;
- ventilating means (11) operatively associated with the drying duct (6) to send air to the continuous semifinished product (7);
characterized in that said ventilating means (11) comprises at least one first and one second supply channels (12, 13) defining a first and a second air flow respectively, which are disposed transversely to the movement direction of the continuous semifinished product and directed towards said product.

2. An apparatus as claimed in claim 1, characterized in that these supply channels (12, 13) define air flows of a substantially planar conformation.

3. An apparatus as claimed in claim 1, characterized in that said first and second supply channels (12, 13) are defined by walls converging on the side of the continuous semifinished product to cause a predetermined velocity increase in the air flow passing through said supply channels.

4. An apparatus as claimed in claim 1, characterized in that said second supply channel is disposed in side by side relationship with, and close to the first supply channel (12), downstream of said channel (12) relative to a movement direction of the continuous semifinished product.

5. An apparatus as claimed in claim 1, characterized in that said first and second supply channels (12, 13) are made at an end portion (14) of an air delivery channel (15), this end portion being also defined by walls converging on the side of said continuous semifinished product, said first and second supply channels (12, 13) being preferably disposed symmetrically to a symmetry plane of said end portion.

6. An apparatus as claimed in claim 1, characterized in that said first and second supply channels are located on the same side relative to said continuous semifinished product.

7. An apparatus as claimed in claim 1, characterized in that it comprises an auxiliary channel (16) opposite to said first and second supply channels and in fluid communication as well with the drying duct, said auxiliary channel preferably having walls converging away from said continuous semifinished product for causing an acceleration in the fluid passing through the auxiliary channel, thereby correspondingly giving rise to a vacuum condition at the inside of the drying channel by a Venturi effect and as a result creating an air stream from said outlet opening (6b) and said inlet opening (6a) towards said auxiliary channel (16).

8. An apparatus as claimed in claim 7, characterized in that it comprises:
- a diffusion chamber (17) located downstream of said auxiliary channel (16); and
- at least one air evacuation opening (18) located downstream of said diffusion chamber (17).

9. An apparatus as claimed in claim 1, characterized in that it comprises a water collecting element (25) engaged to the main body upstream of said inlet opening (6a), and a first water exhaust line (26) operatively associated with said collecting element, said apparatus preferably comprising at least one second water exhaust line (18a) associated with said diffusion chamber (17), substantially close to the air evacuation opening (18).

10. An apparatus as claimed in claim 1, characterized in that said main body (2) comprises:
- a base portion (3) arranged to be fixed to the ground; and
- a movable portion (5) in engagement with said base portion and shiftable from a closed position, in which it defines the drying duct (6) in cooperation with the base portion (3), and an open position, in which the movable portion is moved away from the base portion (3), the movable portion of the main body being preferably hinged to the base portion at a hinging axis (27) parallel to the advance direction of the continuous semifinished product (7) to enable a displacement of the movable portion from its closed position to its open position by carrying out an oscillatory motion.

11. An apparatus as claimed in claim 10, characterized in that it comprises actuating means (28) operatively interposed between said base portion (3) and movable portion (5) to move the latter at least from said closed position to said open position, said actuating means preferably comprising an air actuator (29).

12. An apparatus as claimed in claim 10, characterized in that it comprises counter-weights (31) operatively associated with said movable portion (5) on the opposite side from the drying duct (6) relative to said hinging axis (27) to ensure a predetermined lightening during the movement step of said movable portion.

13. An apparatus as claimed in claim 1, characterized in that said drying duct (6), at its inlet opening (6a) has an entry flaring (32) to facilitate insertion of said continuous semifinished product (7).

14. An apparatus as claimed in claim 1, characterized in that said ventilating means (11) comprises at least one centrifugal fan (3) arranged to send a given air flow to said first and second supply channels (12, 13); and
filtering means (34) operatively interposed between said fan and supply channels.

15. An apparatus as claimed in claims 1, 5 and 10, characterized in that it comprises first, second and third acoustic insulation means (19, 20, 21) associated with said drying duct (6), end portion (14) of the delivery duct and diffusion chamber (17), respectively.
